(19) **Europäisches Patentamt / European Patent Office / Office européen des brevets**

(11) **EP 1 646 909 B1**

(12) **FASCICULE DE BREVET EUROPEEN**

(45) Date de publication et mention de la délivrance du brevet:
**03.04.2013 Bulletin 2013/14**

(21) Numéro de dépôt: **04767609.3**

(22) Date de dépôt: **07.07.2004**

(51) Int Cl.:
*G02F 1/15* *(2006.01)*   *B61D 17/12* *(2006.01)*

(86) Numéro de dépôt international:
**PCT/FR2004/001774**

(87) Numéro de publication internationale:
**WO 2005/006071 (20.01.2005 Gazette 2005/03)**

(54) **DISPOSITIF ELECTROCOMMANDABLE A PROPRIETES OPTIQUES ET/OU ENERGETIQUES VARIABLES**

ELEKTRISCH STEUERBARE EINRICHTUNG MIT VARIABLEN OPTISCHEN UND/ODER ENERGIEEIGENSCHAFTEN

ELECTRICALLY-CONTROLLABLE DEVICE WITH VARIABLE OPTICAL AND/OR ENERGY PROPERTIES

(84) Etats contractants désignés:
**AT BE BG CH CY CZ DE DK EE ES FI FR GB GR HU IE IT LI LU MC NL PL PT RO SE SI SK TR**

(30) Priorité: **09.07.2003 FR 0308385**

(43) Date de publication de la demande:
**19.04.2006 Bulletin 2006/16**

(73) Titulaire: **Sage Electrochromics, Inc.**
**Faribault, MN 55021 (US)**

(72) Inventeurs:
• **GIRON, Jean-Christophe**
  **52074 Aachen (DE)**
• **VAN DER MEULEN, Uwe**
  **52385 Nideggen-Schmidt (DE)**
• **BECK, Franz**
  **52068 Aachen (DE)**
• **PENDER, David**
  **52076 Aachen (DE)**

(74) Mandataire: **Jamet, Vincent**
**Saint-Gobain Recherche,**
**39, quai Lucien Lefranc**
**93300 Aubervilliers (FR)**

(56) Documents cités:
EP-A- 0 363 045   WO-A-99/45415
US-A- 4 488 780   US-A- 4 927 246
US-A- 5 187 496   US-A- 5 981 076

## Description

L'invention concerne les dispositifs électrocommandables à propriétés optiques et/ou énergétiques variables. Elle s'intéresse plus particulièrement aux dispositifs utilisant des systèmes électrochromes, fonctionnant en transmission ou en réflexion.

Des exemples de systèmes électrochromes sont décrits dans les brevets US-5 239 406 et EP-612 826.

Quant à US-A-4 488 780, il décrit un exemple de système électrochrome selon le préambule de la revendication 1.

Les systèmes électrochromes ont été très étudiés. Ils comportent de façon connue généralement deux couches de matériaux électrochromes séparées par un électrolyte et encadrées par deux électrodes. Chacune des couches électrochromes, sous l'effet d'une alimentation électrique, peut insérer réversiblement des charges, la modification de leur degré d'oxydation suite à ces insertions/désinsertions conduisant à une modification dans leurs propriétés optiques et/ou thermiques (par exemple, pour l'oxyde de tungstène, un passage d'une coloration bleue à un aspect incolore).

Il est d'usage de ranger les systèmes électrochromes en trois catégories :

- celle où l'électrolyte est sous forme d'un polymère ou d'un gel ; par exemple un polymère à conduction protonique comme ceux décrits dans les brevets EP-253 713 ou EP-670 346, ou un polymère à conduction d'ions lithium comme ceux décrits dans les brevets EP-382 623, EP-518 754 et EP-532 408 ; les autres couches du système étant généralement de nature minérale,
- celle où l'électrolyte est une couche essentiellement minérale. On désigne souvent cette catégorie sous le terme de système « tout-solide », on pourra en trouver des exemples dans le brevet EP-867 752, EP-831 360, la demande de brevet français FR-2 791 147, la demande de brevet français FR-2 781 084,
- celle où l'ensemble des couches est à base de polymères, catégorie que l'on désigne souvent sous le terme de système « tout-polymère ».

Beaucoup d'applications ont déjà été envisagées pour ces systèmes. Il s'est agit, le plus généralement, de les employer comme vitrages pour le bâtiment ou comme vitrages pour véhicule, notamment en tant que toits auto, ou encore, fonctionnant alors en réflexion et non plus en transmission, en tant que rétroviseurs anti-éblouissement.

Or pour toutes ces applications, du fait leur sensibilité à l'égard des agressions environnementales, les dispositifs électrocommandables ne sont généralement pas insérés en l'état au sein d'un substrat, mais sont protégés au sein d'un substrat feuilleté qui incorpore également au moins un intercalaire de feuilletage, qui est généralement un film polymère.

Ce film polymère peut éventuellement comporter une fonction antisolaire qui a pour but de protéger d'un échauffement éventuel les couches du système électrochrome du rayonnement infra rouge. Dans une autre configuration, la fonction antisolaire est rapportée sur les couches de l'empilement du système électrochrome.

Cependant et quelle soit l'origine de la fonction antisolaire, la fiabilité des systèmes électrochromes que l'on peut par exemple exprimer en terme de durabilité des cycles de commutation entre un état de coloration et un état de décoloration des couches actives est dépendante de la température, et toute variation de température (en particulier une augmentation de température des couches actives consécutives à une exposition intensive à un rayonnement infrarouge (toit électrochrome positionné en plein soleil)) conduit à une augmentation de la vitesse de dégradation desdites couches actives.

Classiquement cette fonction antisolaire est réalisée par un revêtement antireflet qui est usuellement constitué d'un empilement de couches minces interférentielles, en général une alternance de couches à base de matériau diélectrique, à base d'oxyde métallique , notamment du type oxyde, nitrure ou d'oxynitrure de métaux, à forts et faibles indices de réfraction.

Bien qu'elle réponde parfaitement à son rôle de protection des couches actives du système électrochrome à l'égard du rayonnement infra-rouge, la couche antisolaire qui est éventuellement incorporée au sein de l'intercalaire de feuilletage, doit également supporter les contraintes mécaniques consécutives au feuilletage.

Ces contraintes sont d'autant plus sévères lorsque le substrat feuilleté dispose d'un profil complexe (substrat à flèche importante selon au moins une direction, tel qu'un substrat à double bombage).

La présente invention vise donc à pallier ces inconvénients en proposant un dispositif électrocommandable qui incorpore au moins un film polymère qui est adapté pour des profils complexes de substrat.

L'invention a alors pour objet un dispositif électrocommandable à propriétés optiques/énergétiques de transmission ou de réflexion variables, tel que décrit dans la revendication 1.

L'invention sera décrite plus en détail au regard des dessins annexés sur lesquels :

- la figure 1 est une vue schématique d'un dispositif électrocommandable selon l'invention,
- la figure 2 donne la position des différents points nécessaires au calcul du facteur de complexité F.

Sur les dessins annexés, certains éléments peuvent être représentés à des dimensions plus grandes ou plus petites que dans la réalité, et ce afin de faciliter la compréhension des figures.

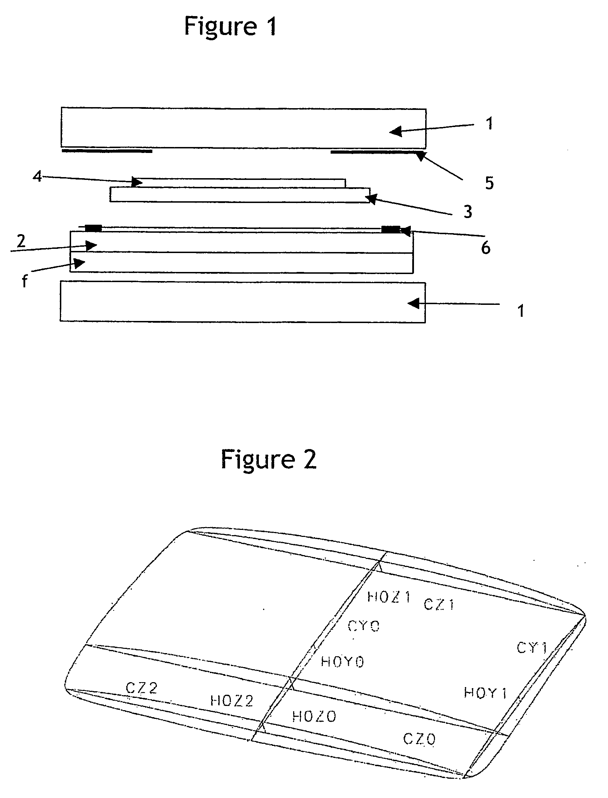

La figure 1 représente un verre 1 muni d'une couche conductrice inférieure 2, d'un empilement actif 3, surmonté d'une couche conductrice supérieure 4, d'un premier réseau de fils conducteurs 5 ou d'un dispositif équivalent permettant d'amener du courant électrique au-dessus de la couche conductrice supérieure, d'un second réseau de fils conducteurs 6 ou d'un dispositif équivalent permettant d'amener du courant électrique en dessous de la couche conductrice inférieure 2. Les amenées de courant sont soit des fils conducteurs si la couche active électrochrome est suffisamment conductrice, soit un réseau de fils cheminant sur ou au sein d'une couche formant électrode, cette électrode étant métallique ou du type TCO (Transparent Conductive Oxide) en ITO, SnO$_2$ :F, ZnO :Al, soit une couche conductrice seule.

Les fils conducteurs 5, 6 sont des fils métalliques par exemple en tungstène (ou en cuivre), éventuellement recouvert de carbone, d'un diamètre compris entre 10 et 100 $\mu$m et préférentiellement compris entre 20 et 50 $\mu$m, rectilignes ou ondulés, déposés sur une feuille de polymère par une technique connue dans le domaine de pare-brise chauffants à fils, par exemple décrite dans les brevets EP-785 700, EP-553 025, EP-506 521, EP-496 669.

Une de ces techniques connues consiste dans l'utilisation d'un galet de pression chauffé qui vient presser le fil à la surface de la feuille de polymère, ce galet de pression étant alimenté en fil à partir d'une bobine d'alimentation grâce à un dispositif guide-fil.

La couche conductrice inférieure 2 est un bicouche constitué d'une première couche SiOC de 50 nm surmontée d'une seconde couche en SnO$_2$ :F de 400 nm (deux couches de préférence déposées successivement par CVD sur le verre float avant découpe).

Alternativement, il peut s'agir d'un bicouche constitué d'une première couche à base de SiO$_2$ dopée ou non (notamment dopé avec de l'aluminium ou du bore) d'environ 20 nm surmontée d'une seconde couche d'ITO d'environ 100 à 350 nm (deux couches de préférence déposées successivement, sous vide, par pulvérisation cathodique assistée par champ magnétique et réactive en présence d'oxygène éventuellement à chaud).

La couche conductrice supérieure est une couche d'ITO de 100 à 300 nm, également déposée par pulvérisation cathodique réactive assistée par champ magnétique sur l'empilement actif ou est réalise de manière analogue à la couche conductrice inférieure 2.

L'empilement actif 3 représenté en figure 1 se décompose de la façon suivante :

● une première couche de matériau électrochrome anodique en oxyde d'iridium (hydraté) IrO$_x$H$_y$ de 40 à 100 nm, (elle peut être remplacée par une couche en oxyde de nickel hydraté), alliée ou non à d'autres métaux,
● une couche en oxyde de tungstène de 100 nm,
● une seconde couche en oxyde de tantale hydraté ou d'oxyde de silice hydraté ou d'oxyde de zirconium hydraté de 100 nm,
● une seconde couche de matériau électrochrome cathodique à base d'oxyde de tungstène WO$_3$ de 370 nm,

cet empilement 3 est particulièrement stable, notamment au UV, et fonctionne par insertion-désinsertion d'ions lithium (Li+) ou alternativement d'ions H+.

L'empilement 3, la couche conductrice supérieure et la couche conductrice inférieure et les amenées de courant incrustées à la surface d'une feuille polymère f sont déposées sur la face interne d'un premier substrat. Le vitrage comporte aussi un second substrat, au-dessus de la feuille polymère. Les deux substrats et la feuille polymère sont solidarisés par une technique connue de feuilletage ou de calandrage, par un chauffage éventuellement sous pression.

La feuille polymère f est un film multicouche diélectrique bi-réfringent réfléchissant au moins 50% de la lumière dans une bande d'au moins 100 nm de large dans une zone spectrale d'intérêt et capable de se conformer à un substrat bombé par effet de contraction uniforme.

Ce film est commercialisé sous la marque « SRF » par la société 3M et forme un multicouche à base de PET/coPMMA d'environ 50 $\mu$m d'épaisseur.

Selon une caractéristique de ce film, il possède un taux de contraction nettement plus important que celui des autres films polymères disposant également d'une fonction anti-solaire.

A titre de comparaison, on donne ci-après les valeurs du taux de contraction après un traitement thermique à 130 °C pendant 1 heure.

Ces valeurs sont à comparer avec celle d'un film traditionnel en PET, commercialisé par la société Southwall qui incorpore un revêtement anti-solaire.

Pour ce film, les valeurs de contraction sont comprises entre 0.25 % et 0.45 % Pour le film commercialisé par la société 3M, les valeurs de contraction sont comprises entre 0.8 % à 1.5 % pour une fabrication standard, et entre 1.6 % à 4 %, préférentiellement comprises entre 1.9 % à 2.2 % pour une fabrication spéciale qui a été développée pour les besoins de l'invention.

Au sens de l'invention, on a défini le paramètre F qui permet de caractériser la complexité d'un vitrage qui incorpore le film polymère, par exemple celui développé par la société 3M.

Le paramètre F se calcule de la manière suivante :

$$F = \frac{H_O Y_O}{CY_O} \times \frac{H_O Z_O}{CZ_O}$$

On pourra se reporter au graphique donné en figure 2 pour le positionnement spatial des divers points mentionnés dans cette formule.

Ce film polymère est intégré au sein d'un substrat feuilleté dont la valeur F de complexité est comprise entre 0,00215 et 0,00240 et préférentiellement comprise 0,00219 et 0,00230.

L'ensemble des trois parties réalise un dispositif électrocommandable à propriétés optiques et/ou énergétiques variables dont le matériau électrochrome est protégé vis-à-vis de l'extérieur augmentant de ce fait la durée de vie du dispositif électrocommandable. Le film polymère est particulièrement adapté pour protéger la couche de matériau fonctionnel (électrochrome par exemple) des impacts, notamment de gravillons pouvant conduire à un éclat étoilé du substrat. Par ailleurs, on peut noter que le film polymère constitue une barrière à l'humidité qui ralentit efficacement la détérioration au niveau des impacts provoqués par les gravillons.

Par ailleurs, les deux verres formant les substrats du dispositif électrocommandable décrits précédemment sont en verre clair plan, standard, silico-sodo-calcique d'environ 2 mm d'épaisseur chacun, l'un au moins pouvant être teinté dans la masse.

Ainsi un exemple de réalisation de l'invention est constitué de la manière suivante :

Verre (2.1 mm)/PU (0.76 mm)/film polymère/PU (0.76 mm)/couche fonctionnelle/Verre Gris (2.1 mm).

Lorsque cette couche fonctionnelle est le système électrochrome visé précédemment, des mesures donnent

➢ Etat coloré :

$T_L$=1.1%; a*=-2; b*=-14; $T_E$=0.7%; $R_E$=22 %

➢ Etat décoloré :

$T_L$=18%; a*= -6; b*= 7 ; $T_E$=10%; $R_E$=21 %

Dans cette configuration de montage, le film polymère dispose de dimensions inférieures à celles des substrats entre lesquels il est intégré, le film polymère suit les contours de la sérigraphie de telle sorte que les bords du film soient noyés dans les points de la sérigraphie. Cette configuration permet d'atteindre des valeurs de complexité de bombage (de F) encore plus élevées.

L'invention s'applique de la même manière à des verres bombés et/ou trempés.

De même, au moins un des verres peut être teinté dans la masse, notamment teinté en bleu ou en vert, en gris, bronze ou brun.

Les substrats utilisés dans l'invention peuvent aussi être à base de polymère (PMMA, PC...). On note aussi que les substrats peuvent avoir des formes géométriques très variées : il peut s'agir de carrés ou de rectangles, mais aussi de tout polygone ou profil au moins partiellement courbe, défini par des contours arrondis ou ondulés (rond, ovale, « vagues », etc...).

Par ailleurs, au moins un des deux verres (sur la face qui n'est pas munie du système électrochrome ou équivalent) peut être recouvert d'un revêtement comportant une autre fonctionnalité (cette autre fonctionnalité pouvant être par exemple un empilement anti-solaire, un empilement anti-salissure ou autre). En tant qu'empilement anti-solaire, il peut s'agir d'un empilement de couches minces déposées par pulvérisation cathodique et comprenant au moins une couche d'argent. On peut ainsi avoir des combinaisons du type

- verre/système électrochrome/couches anti-solaire/verre.
- verre/système électrochrome/verre/thermoplastique/verre.
- verre/système électrochrome/thermoplastique/verre
- verre/thermoplastique/système électrochrome/thermoplastique/verre.

On peut aussi déposer le revêtement anti-solaire non pas sur un des verres, mais sur une feuille de polymère souple du type PET (polyéthylènetéréphtalate).

Pour des exemples de revêtements anti-solaires, on peut se reporter aux brevets EP 826 641, EP844 219, EP 847 965, WO99/45415, EP 1 010 677.

Le dispositif objet de l'invention précédemment décrit peut être aussi intégré au sein d'un « substrat » tri-verre, ce dernier étant avantageusement utiliser lors de l'élaboration de vitrages conformes aux exigences de sécurité.

Par ailleurs, on peut noter que le dispositif électrocommandable tel que décrit précédemment offre l'avantage d'être transparent aux ondes électromagnétiques.

En effet, ces dispositifs électrocommandables incorporant les fonctionnalités électrochromes et antisolaires sont de plus en plus utilisés dans le domaine de l'automobile, domaine qui requiert souvent une transparence aux ondes électromagnétiques (téléphone portable, télécommande diverse, système de paiement automatique aux barrières de péages...).

## Revendications

1. Dispositif électrocommandable à propriétés optiques/énergétiques de transmission ou de réflexion variables, comportant au moins un substrat porteur muni d'un empilement de couches à fonction électrochrome comprenant au moins deux couches actives électrochromes, séparées par un électrolyte, ledit empilement étant disposé entre deux amenées de courant, respectivement inférieure et supérieure, l'amenée de courant inférieure correspondant à l'amenée de courant la plus proche du substrat porteur, par opposition à l'amenée de courant supérieure qui est la plus éloignée dudit substrat, *caractérisé en ce que* le dispositif comprend au moins un film polymère placé entre le substrat porteur et l'empilement de couches à fonction électrochrome et dont le pourcentage de contraction est compris entre 0,6 et 4,0 %, préférentiellement compris entre 0,6 et 2,0 % et de manière encore plus préférentielle entre 0,8 et 1.5 %, après un traitement thermique à 130°C pendant 1 heure.

2. Dispositif selon la revendication 1, *caractérisé en ce que* le film polymère est un film multicouche diélectrique bi-réfringent adapté pour réfléchir au moins 50 % de la lumière dans une bande spectrale d'au moins 100 nm de large.

3. Dispositif selon l'une des revendications précédentes, *caractérisé en ce qu'il* s'agit d'un toit auto pour véhicule, activables de façon autonome, ou d'une vitre latérale ou d'une lunette arrière pour véhicule.

4. Dispositif selon l'une quelconque des revendications précédentes, *caractérisé en ce que* le substrat est un substrat à double bombage.

5. Dispositif selon la revendication 1 ou 2, *caractérisé en ce qu'il* s'agit d'un pare-brise ou d'une portion de pare-brise.

6. Dispositif selon la revendication 5, *caractérisé en ce que* le dispositif est situé en partie haute du pare-brise, notamment sous forme d'une ou plusieurs bandes suivant le contour du pare-brise.

7. Dispositif selon la revendication 5 ou 6, *caractérisé en ce que* le dispositif est situé en partie médiane du pare-brise, notamment pour éviter l'éblouissement du conducteur la nuit, à l'aide d'une régulation automatisée de son alimentation électrique utilisant au moins une caméra et/ou au moins un capteur de lumière.

8. Dispositif selon la revendication 1 ou 2, *caractérisé en ce qu'il* s'agit d'un panneau d'affichage d'informations graphiques et/ou alphanumériques, d'un vitrage pour le bâtiment, d'un rétroviseur, d'un hublot ou d'un pare-brise d'avion, ou d'une fenêtre de toit.

9. Dispositif selon la revendication 1 ou 2, **caractérisé en ce qu'**il s'agit :

    - d'un vitrage intérieur ou extérieur pour le bâtiment,
    - d'un présentoir, comptoir de magasin pouvant être bombé,
    - d'un vitrage de protection d'objet du type tableau,
    - d'un écran anti-éblouissement d'ordinateur,
    - d'un mobilier verrier.

10. Dispositif selon l'une des revendications précédentes, *caractérisé en ce qu'il* fonctionne en transmission ou en réflexion.

11. Dispositif selon l'une des revendications précédentes, *caractérisé en ce que* ledit au moins un substrat est transparent, plan ou bombé, clair ou teinté dans la masse, de forme polygonale ou au moins partiellement courbe.

12. Dispositif selon l'une des revendications 1 à 10, *caractérisé en ce que* ledit au moins un substrat est opaque ou opacifié.

13. Dispositif selon l'une quelconque des revendications précédentes, **caractérisé en ce que** la conductivité électronique de l'une au moins des couches actives est suffisante pour remplacer les couches conductrices par un réseau de fils.

14. Dispositif selon la revendication 13, **caractérisé en ce que** les fils conducteurs viennent renforcer la conductivité des couches actives pour garantir l'homogénéité des colorations.

15. Dispositif selon l'une quelconque des revendications précédentes, **caractérisé en ce q**u'il incorpore en outre un empilement anti-solaire ou un empilement anti-salissure.

## Claims

1. Electrically controllable device having variable optical/energy properties in transmission or in reflection, comprising at least one carrier substrate provided with a stack of electrochromically functional layers, including at least two electrochromic active layers, separated by an electrolyte, the said stack being placed between two current leads, namely the lower current lead and the upper current lead respectively, the lower current lead corresponding to the current lead closest to the carrier substrate, as opposed to the upper current lead that is furthest from the said substrate, **characterized in that** the device comprises at least one polymer film placed between the carrier substrate and the stack of electrochromically functional layers and the percentage shrinkage of which is between 0.6 and 4.0% preferably between 0.6 and 2.0% and even more preferably between 0.8 and 1.5%, after a heat treatment at 130°C for 1 hour.

2. Device according to Claim 1, **characterized in that** the polymer film is a birefringent dielectric multilayer film suitable for reflecting at least 50% of the light within a spectral band of at least 100 nm in width.

3. Device according to either of the preceding claims, **characterized in that** it constitutes a vehicle sunroof, which can be actuated autonomously, or a vehicle side window or rear window.

4. Device according to any one of the preceding claims, **characterized in that** the substrate is a doubly curved substrate.

5. Device according to Claim 1 or 2, **characterized in that** it constitutes a windscreen or portion of a windscreen.

6. Device according to Claim 5, **characterized in that** the device is located in the top part of the windscreen, especially in the form of one or more bands along the outline of the windscreen.

7. Device according to Claim 5 or 6, **characterized in that** the device is located in the central part of the windscreen, especially in order to prevent a driver being dazzled at night, with the aid of automated control of its power supply using at least one camera and/or at least one light sensor.

8. Device according to Claim 1 or 2, **characterized in that** it constitutes a graphical and/or alphanumeric data display panel, glazing for buildings, a rearview mirror, an aircraft cabin window or windscreen, or a skylight.

9. Device according to Claim 1 or 2, **characterized in that** it constitutes:

   - interior or exterior glazing for buildings;
   - a shop showcase or countertop, which may be curved;
   - glazing for the protection of an object of the painting type;
   - a computer antidazzle screen;
   - glass furniture.

10. Device according to one of the preceding claims, **characterized in that** it operates in transmission or in reflection.

11. Device according to one of the preceding claims, **characterized in that** the said at least one substrate is transparent, plain or curved, clear or bulk-tinted, polygonal in shape or at least partly curved.

12. Device according to one of Claims 1 to 10, **characterized in that** the said at least one substrate is opaque or opacified.

13. Device according to any one of the preceding claims, **characterized in that** the electronic conductivity of at least one of the active layers is sufficient for replacing the conducting layers with a grid of wires.

14. Device according to Claim 13, **characterized in that** the conducting wires increase the conductivity of the active layers, in order to guarantee colouration uniformity.

15. Device according to any one of the preceding claims, **characterized in that** it also incorporates a solar-protection stack or an antifouling stack.

## Patentansprüche

1. Elektrisch steuerbare Einrichtung mit variablen optischen/Energie-Durchlässigkeits- oder Reflexionseigenschaften, die mindestens ein Trägersubstrat umfasst, das mit einem Stapel von Schichten mit elektrochromer Funktion versehen ist, der mindestens zwei elektrochrome aktive Schichten umfasst, die durch einen Elektrolyt getrennt sind, wobei der Stapel zwischen zwei Stromzuleitungen, einer unteren beziehungsweise einer oberen, angeordnet ist, wobei die untere Stromzuleitung der Stromzuleitung entspricht, die näher am Trägersubstrat liegt, im Gegensatz zur oberen Stromzuleitung, die diejenige ist, die am weitesten vom Substrat entfernt liegt, **dadurch gekennzeichnet, dass** die Einrichtung mindestens einen Polymerfilm umfasst, der zwischen dem Trägersubstrat und dem Stapel von Schichten mit elektrochromer Funktion angeordnet ist und dessen Schrumpfungsprozentsatz nach einer Wärmebehandlung während 1 Stunde bei 130 °C zwischen 0,6 und 4,0 %, vorzugsweise zwischen 0,6 und 2,0 % und, noch mehr zu bevorzugen, zwischen 0,8 und 1,5 % liegt.

2. Einrichtung nach Anspruch 1, **dadurch gekennzeichnet, dass** der Polymerfilm ein mehrschichtiger doppelbrechender dielektrischer Film ist, der angepasst ist, um in einem Spektralband mit einer Breite von mindestens 100 nm mindestens 50 % des Lichts zu reflektieren.

3. Einrichtung nach einem der vorhergehenden Ansprüche, **dadurch gekennzeichnet, dass** es sich um ein Autodach für Fahrzeuge, das selbständig aktivierbar ist, oder um eine Seitenscheibe oder ein Heckfenster für Fahrzeuge handelt.

4. Einrichtung nach einem der vorhergehenden Ansprüche, **dadurch gekennzeichnet, dass** das Substrat ein Substrat mit doppelter Wölbung ist.

5. Einrichtung nach Anspruch 1 oder 2, **dadurch ge-**

**kennzeichnet, dass** es sich um eine Windschutzscheibe oder einen Windschutzscheibenabschnitt handelt.

6. Einrichtung nach Anspruch 5, **dadurch gekennzeichnet, dass** die Einrichtung, insbesondere in der Form von einem oder mehreren Streifen, die dem Umriss der Windschutzscheibe folgen, sich im oberen Teil der Windschutzscheibe befindet.

7. Einrichtung nach Anspruch 5 oder 6, **dadurch gekennzeichnet, dass** die Einrichtung sich im mittleren Teil der Windschutzscheibe befindet, insbesondere, um nachts mittels einer automatischen Regelung ihrer Stromversorgung unter Verwendung von mindestens einer Kamera und/oder mindestens einem Lichtsensor die Blendung des Fahrers zu verhindern.

8. Einrichtung nach Anspruch 1 oder 2, **dadurch gekennzeichnet, dass** es sich um eine Anzeigetafel für graphische und/oder alphanumerische Informationen, eine Verglasung für Gebäude, einen Rückspiegel, ein Schiffsfenster oder eine Flugzeug-Windschutzscheibe oder um ein Dachfenster handelt.

9. Einrichtung nach Anspruch 1 oder 2, **dadurch gekennzeichnet, dass** es sich um Folgendes handelt:

   - eine Innen- oder Außenverglasung für Gebäude;
   - eine Schauvitrine, einen Ladentisch, die/der gewölbt sein kann,
   - eine Schutzverglasung für einen Gegenstand des Typs eines Gemäldes,
   - einen blendungsfreien Computerbildschirm,
   - ein Glasmöbel.

10. Einrichtung nach einem der vorhergehenden Ansprüche, **dadurch gekennzeichnet, dass** sie durchlässig oder reflektierend funktioniert.

11. Einrichtung nach einem der vorhergehenden Ansprüche, **dadurch gekennzeichnet, dass** das mindestens eine Substrat lichtdurchlässig, flach oder gewölbt, in der Masse hell oder getönt, vieleckig oder zumindest teilweise gekrümmt ist.

12. Einrichtung nach einem der Ansprüche 1 bis 10, **dadurch gekennzeichnet, dass** das mindestens eine Substrat undurchsichtig oder undurchsichtig gemacht ist.

13. Einrichtung nach einem der vorhergehenden Ansprüche, **dadurch gekennzeichnet, dass** die elektronische Leitfähigkeit von mindestens einer der aktiven Schichten ausreicht, um die leitfähigen Schichten durch ein Netz von Drähten zu ersetzen.

14. Einrichtung nach Anspruch 13, **dadurch gekennzeichnet, dass** die leitfähigen Drähte die Leitfähigkeit der aktiven Schichten verstärken, um die Gleichmäßigkeit der Färbungen zu gewährleisten.

15. Einrichtung nach einem der vorhergehenden Ansprüche, **dadurch gekennzeichnet, dass** sie überdies eine Sonnenschutzschicht oder eine schmutzabweisende Schicht aufnimmt.

# Figure 1

# Figure 2

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5239406 A
- EP 612826 A
- US 4488780 A
- EP 253713 A
- EP 670346 A
- EP 382623 A
- EP 518754 A
- EP 532408 A
- EP 867752 A
- EP 831360 A
- FR 2791147

- FR 2781084
- EP 785700 A
- EP 553025 A
- EP 506521 A
- EP 496669 A
- EP 826641 A
- EP 844219 A
- EP 847965 A
- WO 9945415 A
- EP 1010677 A